# EUROPÄISCHE PATENTSCHRIFT

(11) **EP 2 881 523 B1**
(45) Veröffentlichungstag und Bekanntmachung des Hinweises auf die Patenterteilung: **26.05.2021**
(21) Anmeldenummer: 14191490.3
(22) Anmeldetag: 03.11.2014
(51) Int. Cl.: G01C 15/04, H01F 7/02, B28B 23/00, E04G 21/18, F24D 3/14, E04G 15/06

(54) **VERFAHREN ZUM MARKIEREN EINES MESSPUNKTS IN EINER GEGOSSENEN BETONDECKE**
METHOD FOR MARKING A MEASUREMENT POINT IN A CAST CONCRETE CEILING
PROCÉDÉ DESTINÉ AU REPÉRAGE D'UN POINT DE MESURE DANS UN REVÊTEMENT EN BÉTON COULÉ

(30) Priorität: 06.11.2013 AT 507382013
(43) Veröffentlichungstag der Anmeldung: 10.06.2015
(73) Patentinhaber: KE KELIT GmbH, 4020 Linz (AT)
(72) Erfinder: Ratschmann, Elmar, 4202 Hellmonsödt (AT); Pöchhacker, Martin, 3251 Purgstall (AT)
(74) Vertreter: Hübscher & Partner Patentanwälte GmbH

(56) Entgegenhaltungen:
- DE-A1-102011 017 472
- GB-A- 1 506 541
- JP-A- H11 336 234
- JP-A- 2001 277 223
- JP-A- 2006 097 284

## Beschreibung

Die Erfindung bezieht sich auf ein Verfahren zum Markieren eines Messpunkts in einer gegossenen Betondecke, wobei die Schalung für die Betondecke mit einem Markierungskörper für den auf der Schalung abgebildeten Messpunkt versehen wird, bevor die Betondecke gegossen wird, und der Markierungskörper bei der Entschalung der Betondecke in der Betondecke verbleibt, sowie auf eine Vorrichtung zur Durchführung des Verfahrens.

Zur Klimatisierung von Räumen ist es bekannt, Wärmetauscher aus durch Abstandhalterprofile zu Flächenregistern zusammengefassten Rohrschlangen für einen Wärmeträger in die Betondecke einzubetten. Diese Flächenregister werden mit einem vorgegebenen Abstand voneinander auf der Schalung verlegt, bevor die Betondecke mit einer entsprechenden Bewehrung gegossen wird. Da beispielsweise bei Bürogebäuden erst nachträglich die Raumaufteilung festgelegt wird, ist dafür zu sorgen, dass die zu errichtenden Trennwände im Zwischenbereich zwischen den Flächenregistern der Wärmetauscher verlaufen, um ein irrtümliches Anbohren der Rohrschlangen zu vermeiden. Zu diesem Zweck werden auf der Schalung für die Betondecke Messpunkte festgelegt, die üblicherweise durch in die Deckenschalung geschlagene Nägel markiert werden. Die mit ihren Köpfen in die gegossene Betondecke vorstehenden Nägel verbleiben beim Entschalen in der Betondecke und bilden Markierungskörper, die den Verlauf der Abstandsfugen zwischen den einzelnen Flächenregistern der Wärmetauscher anzeigen. Da die Nagelspitzen nach unten über die Betondecke vorstehen, werden sie häufig abgetrennt, um das Auftragen einer Putzschicht nicht zu behindern. Damit gehen aber die durch die Nägel gebildeten Markierungspunkte verloren. Werden die Nagelspitzen erst nach dem Auftragen einer Putzschicht gekürzt, so wird die Putzschicht durch die Nägel sichtbar unterbrochen. Außerdem besteht die Gefahr, dass sich durch die Korrosion der Nägel Rostflecken in der Putzschicht abzeichnen.

Um Gewindehülsen in einem Betonkörper lagegenau einbetten zu können, ist es bekannt (JP 2006-097284 A), die Gewindehülsen jeweils auf eine Halterung aufzuschrauben und die Halterung mittels eines Ringmagneten an einer stählernen Schalung festzuhalten. Die genaue Positionierung der Halterung wird durch einen Positionierstift erreicht der die Schalung durchsetzt und in die Öffnung des Ringmagneten eingreift. Nach der Entschalung der gegossenen Betondecke werden die Halterungen mit den Ringmagneten aus den Gewindehülsen ausgeschraubt, die dann frei zugänglich sind.

Permanentmagnete werden auch zur einfachen, lösbaren Befestigung von in einen Betonkörper einzubettenden Hülsen an einer Schalung eingesetzt und bei der Entschalung von den Hülsen gelöst (JP H11-336234 A, JP 2001-277223 A). Nach der DE 10 2011 017 472 A1 werden zum Eingießen von Befestigungsteilen in Form von Hohlprofilen in einen Betonkörper diese Hohlprofile mithilfe von zumindest an beiden Profilenden oder entlang der Hohlprofile bleibend angeordneten Permanentmagneten an einer stählernen Schalung lösbar gehalten. Diese mit den Hohlprofilen am Betonkörper verbleibenden Permanentmagnete haben nach der Entschalung keine Funktion.

Der Erfindung liegt somit die Aufgabe zugrunde, eine gegossene Betondecke mit Flächenregistern zur Raumklimatisierung so mit Markierungskörpern auszustatten, dass die Markierungskörper ohne Beeinträchtigung der auf der Unterseite der Betondecke aufgebrachten Putzschicht in einfacher Weise erfasst werden können. Diese Aufgabe wird durch die Merkmale des Anspruchs 1 bzw. des Anspruchs 3 gelöst.

Ausgehend von einem Verfahren der eingangs geschilderten Art löst die Erfindung die gestellte Aufgabe dadurch, dass als Markierungskörper ein zumindest abschnittsweise ferromagnetischer Ringkörper konzentrisch zum Messpunkt an der Schalung lösbar befestigt wird.

Aufgrund der lösbaren Befestigung des zumindest abschnittsweise ferromagnetischen Ringkörpers auf der Schalung für die Betondecke kann die gegossene Betondecke nach ihrer Aushärtung entschalt werden, ohne die Ringkörper aus der Betondecke zu lösen. Die zufolge ihrer Befestigung auf der Schalung bündig mit der Betondecke abschließenden Ringkörper stellen keine Beeinträchtigungen für das Aufbringen einer Putzschicht auf der Unterseite der Betondecke dar, sodass eine durchgehende Putzschicht mit einer störungsfreien Sichtfläche gewährleistet werden kann. Trotzdem können die Markierungskörper einfach durch die Putzschicht hindurch geortet werden, weil sie zumindest abschnittsweise aus einem ferromagnetischen Werkstoff gefertigt sind und daher mit Hilfe eines Magneten erfasst werden können. Da als Markierungskörper ferromagnetische Ringkörper eingesetzt werden, werden zur Ortung vorteilhaft Ringmagnete eingesetzt, die durch die ferromagnetischen Ringkörper koaxial angezogen werden. Da die Ringkörper konzentrisch zu den Messpunkten an der Schalung befestigt wurden, legt der von den ringförmigen Markierungskörpern angezogene Ringmagnet den jeweiligen Messpunkt mit hinreichender Genauigkeit fest, der durch den angezogenen Ringmagneten hindurch auf der Putzschicht angezeichnet oder durch den Ringmagneten hindurch in die Putzschicht gebohrt werden kann.

Die Befestigung des ferromagnetischen Ringkörpers auf der Schalung kann in unterschiedlicher Weise, beispielsweise durch eine Klebung, erfolgen. Für den rauen Betrieb auf einer Baustelle eignet sich allerdings eine Befestigung mit Hilfe eines Befestigungsstifts, insbesondere eines Nagels, besser. Aus diesem Grunde empfiehlt es sich, den Ringkörper mittels eines in der Schalung verbleibenden Befestigungsstifts auf der Schalung zu befestigen, sodass beim Entschalen der gegossenen und ausgehärteten Betondecke der Befestigungsstift mit der Schalung entfernt wird, während der in der Betondecke eingebettete Ringkörper durch die Betondecke zurückgehalten wird.

Die Vorrichtung zum Markieren eines Messpunkts in einer gegossenen Betondecke kann insbesondere dann vorteilhaft eingesetzt werden, wenn der Markierungskörper einen zumindest abschnittsweise ferromagnetischen Ringkörper aufweist, der von einem über eine Solltrennstelle am Ringkörper abgestützten Befestigungsstift durchsetzt ist. Mit Hilfe dieses Befestigungsstifts kann der Ringkörper in einfacher Weise auf der Schalung befestigt werden, wobei die Solltrennstelle zwischen dem Ringkörper und der Abstützung des Befestigungsstifts dafür sorgt, dass der Befestigungsstift mit der Schalung von der Betondecke gelöst werden kann.

Besonders einfache Konstruktionsverhältnisse ergeben sich in diesem Zusammenhang dadurch, dass an den ferromagnetischen Ringkörper eine koaxiale Kunststoffhülse anschließt, die eine die Solltrennstelle bildende Einschnürung zur Abstützung eines Kopfs des Befestigungsstifts aufweist. Die Kunststoffhülse kann mit einer entsprechenden Einschnürung eine für die Befestigung des ferromagnetischen Ringkörpers ausreichende Abstützung für den Befestigungsstift bilden, ohne das Durchziehen des Kopfs des Befestigungsstifts durch die Einschnürung beim Entschalen der Betondecke ernsthaft zu behindern. Der Befestigungsstift könnte als Schraube ausgebildet sein. Einfachere Montagebedingungen ergeben sich allerdings beim Einsatz von Nägeln als Befestigungsstifte. Die Haftreibung zwischen dem Nagelschaft und der Schalung reicht durchaus für ein Überwinden der durch die Einschnürung der Kunststoffhülse gebildeten Solltrennstelle aus. Der ferromagnetische Ringkörper kann in eine ringförmige stirnseitig offene Aufnahmekammer am Ende der Kunststoffhülse eingesetzt werden. Da die wirksamen Magnetkräfte vom Abstand zwischen dem Ortungsmagneten und dem ferromagnetischen Ringkörper abhängen, bringt das bündige Einsetzen des ferromagnetischen Ringkörpers in die die stirnseitig offene Aufnahmekammer entsprechende Abstandsvorteile mit sich.

Damit die Gefahr eines Ausreißens des Markierungskörpers aus der Betondecke bei ihrer Entschalung gebannt werden kann, kann die an den Ringkörper angesetzte Kunststoffhülse mit äußeren Umfangsrippen versehen sein, die die Rückhaltewirkung durch eine Verzahnung mit der Betondecke unterstützen.

Wie bereits ausgeführt wurde, werden die zu Flächenregistern zusammengefassten Rohrschlangen der Wärmetauscher zur Raumklimatisierung mit einem vorgegebenen gegenseitigen Randabstand verlegt. Die Markierungskörper bestimmen diese Randverläufe und können daher auch als Verlegehilfe für die Flächenregister der Wärmetauscher genützt werden. Zu diesem Zweck können entsprechende Rohrstutzen auf die Kunststoffhülse aufgesteckt werden, sodass die vorstehenden Rohrstutzen die freizulassenden Abstandsfugen zwischen den Flächenregistern bestimmen. Sind die Rohrstutzen mit quer zu ihnen verlaufenden Abstandhaltern versehen, so können die Flächenregister der Wärmetauscher entlang dieser Abstandhalter verlegt werden.

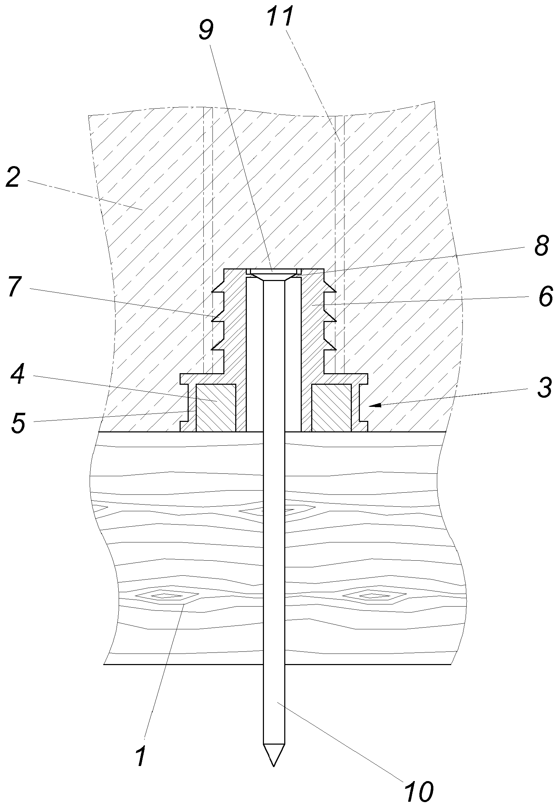

Anhand der Zeichnung wird das erfindungsgemäße Verfahren näher erläutert, und zwar wird eine erfindungsgemäße Vorrichtung zum Markieren eines Messpunkts in einer gegossenen Betondecke in einem schematischen Längsschnitt gezeigt.

Die Zeichnung lässt eine Schalung 1 für eine zu gießende Betondecke 2 erkennen, wobei auf der Schalung 1 Messpunkte durch Markierungskörper 3 festgelegt werden sollen, die beim Entschalen der ausgehärteten Betondecke 2 in der Betondecke verbleiben. Die Markierungskörper 3 umfassen gemäß dem Ausführungsbeispiel einen ferromagnetischen Ringkörper 4, der in eine stirnseitig offene ringförmige Aufnahmekammer 5 eingesetzt ist, an die sich eine zum Ringkörper 4 koaxiale Kunststoffhülse 6 anschließt. Diese mit Umfangsrippen 7 versehene Kunststoffhülse 6 besitzt eine Einschnürung 8, die als Abstützung für den Kopf 9 eines vorzugsweise als Nagel ausgebildeten Befestigungsstifts 10 dient.

Um einen auf der Schalung 1 vor dem Gießen der Betondecke 2 vermessenen Messpunkt mit Hilfe des Markierungskörpers 3 festzulegen, wird der Markierungskörper 3 mit dem ferromagnetischen Ringkörper 4 konzentrisch gegenüber dem Messpunkt ausgerichtet und in dieser Lage mit Hilfe des Befestigungsstifts 10 auf der Schalung 1 befestigt, indem der Befestigungsstift 10 in die Schalung 1 eingeschlagen wird. Nach der Festlegung der Messpunkte durch die an der Schalung 1 befestigten Markierungskörper 3 können zu Flächenregistern zusammengefasste Wärmetauscher auf der Schalung 1 über entsprechende Abstandhalterprofile verlegt werden, wobei die Markierungskörper 3 den Verlauf der Abstandsfugen zwischen den einzelnen Flächenregistern vorgeben. Zur Verlegehilfe können auf die Kunststoffhülsen 6 Rohrstutzen 11 aufgesteckt werden, die vorzugsweise Abstandhalter für die Flächenregister der Wärmetauscher tragen. Nach dem Verlegen der Flächenregister und dem Aufbringen einer entsprechenden Deckenbewehrung kann die Betondecke 2 in herkömmlicher Weise gegossen werden. Zur Entschalung der ausgehärteten Betondecke 2 wird die Schalung 1 von der Betondecke 2 gelöst, wobei der Kopf 9 des Befestigungsstifts 10 durch die als Solltrennstelle ausgebildete Einschnürung 8 aus der Kunststoffhülse 6 ausgezogen wird. Der Solltrennstelle kommt die Aufgabe zu, das Ausziehen des Befestigungsstifts 10 beim Überschreiten einer vorgegebenen Ausziehkraft zu ermöglichen. Dies kann durch einen Trennbruch im Bereich der Einschnürung oder des Kopfs 9 des Befestigungsstifts 10 erfolgen. Die Solltrennstelle kann aber auch durch eine elastische oder plastische Verformung der Kopfabstützung erreicht werden.

Während des Ausziehens des Befestigungsstifts 10 aus der Kunststoffhülse 6 wird die Kunststoffhülse 6 mit dem ferromagnetischen Ringkörper 4 durch die Betondecke 2 zurückgehalten, sodass nach der Entschalung die Ringkörper 4 bündig mit der Unterfläche der Betondecke 2 abschließen. Die Betondecke 2 kann daher auf der Unterseite in üblicher Weise mit einer Putzschicht versehen werden, die die Markierungskörper 3 vollständig abdeckt. Trotz dieser Abdeckung können die Markierungskörper 3 in einfacher Weise geortet werden, weil zu diesem Zweck lediglich die ferromagnetischen Ringkörper 4 mit Hilfe eines Ringmagneten erfasst werden, der aufgrund der magnetischen Feldlinien konzentrisch an den ferromagnetischen Ringkörper angezogen wird und dann den durch den Markierungskörper 3 auf die Betondecke 2 übertragenen Messpunkt wiedergibt, der durch den Ringmagneten angezeigt oder angebohrt werden kann.

## Patentansprüche

1. Verfahren zum Markieren eines Messpunkts in einer gegossenen Betondecke (2), wobei eine Schalung (1) für die Betondecke (2) mit einem Markierungskörper (3) für den auf der Schalung (1) abgebildeten Messpunkt versehen wird, bevor die Betondecke (2) gegossen wird, und der Markierungskörper (3) bei der Entschalung der Betondecke (2) in der Betondecke (2) verbleibt, **dadurch gekennzeichnet, dass** als Markierungskörper (3) ein zumindest abschnittsweise ferromagnetischer Ringkörper (4) konzentrisch zum Messpunkt an der Schalung (1) lösbar befestigt wird.

2. Verfahren nach Anspruch 1, **dadurch gekennzeichnet, dass** der Ringkörper (4) mittels eines in der Schalung (1) verbleibenden Befestigungsstifts (10) auf der Schalung (1) befestigt wird.

3. Vorrichtung zum Markieren eines Messpunkts in einer gegossenen Betondecke (2) mit einem an einer Schalung (1) befestigbaren Markierungskörper (3), **dadurch gekennzeichnet, dass** der Markierungskörper (3) einen zumindest abschnittsweise ferromagnetischen Ringkörper (4) aufweist, der von einem Befestigungsstift (10) durchsetzt ist, und dass der Markierungskörper (3) eine Abstützung für den Befestigungsstift (10) und eine Solltrennstelle zwischen dem ferromagnetischen Ringkörper (4) und der Abstützung bildet, sodass der Befestigungsstift (10) mit der Schalung (1) von der Betondecke (2) gelöst werden kann.

4. Vorrichtung nach Anspruch 3, **dadurch gekennzeichnet, dass** an den ferromagnetischen Ringkörper (4) eine koaxiale Kunststoffhülse (6) anschließt, die eine die Solltrennstelle bildende Einschnürung (8) zur Abstützung eines Kopfs (9) des Befestigungsstifts (10) aufweist.

5. Vorrichtung nach Anspruch 4, **dadurch gekennzeichnet, dass** die Kunststoffhülse (6) an eine ringförmige, stirnseitig offene Aufnahmekammer (5) für den ferromagnetischen Ringkörper (4) angesetzt ist.

6. Vorrichtung nach Anspruch 4 oder 5, **dadurch gekennzeichnet, dass** die an den Ringkörper (4) angesetzte Kunststoffhülse (6) mit äußeren Umfangsrippen (7) versehen ist.

7. Vorrichtung nach einem der Ansprüche 4 bis 6, **dadurch gekennzeichnet, dass** auf die Kunststoffhülse (6) ein Rohrstutzen (11) aufsteckbar ist.

## Claims

1. Method for marking a measurement point in a cast concrete ceiling (2), wherein formwork (1) for the concrete ceiling (2) is provided with a marking body (3) for the measurement point indicated on the formwork (1) before the concrete ceiling (2) is cast, and the marking body (3) remains in the concrete ceiling (2) after removal of the formwork from the concrete ceiling (2), **characterised in that** as the marking body (3) an annular body (4), which is ferromagnetic at least in sections, is releasably fastened to the formwork (1) in a concentric manner with respect to the measurement point.

2. Method as claimed in claim 1, **characterised in that** the annular body (4) is fastened on the formwork (1) by means of a fastening pin (10) which remains in the formwork (1).

3. Apparatus for marking a measurement point in a cast concrete ceiling (2), comprising a marking body (3) which can be fastened to formwork (1), **characterised in that** the marking body (3) has an annular body (4) which is ferromagnetic at least in sections and has a fastening pin (10) passing therethrough, and **in that** the marking body (3) forms a support for the fastening pin (10) and a predetermined separation point between the ferromagnetic annular body (4) and the support such that the fastening pin (10) with the formwork (1) can be detached from the concrete ceiling (2).

4. Apparatus as claimed in claim 3, **characterised in that** the ferromagnetic annular body (4) is adjoined by a coaxial synthetic material sleeve (6) which has a constriction (8), which forms the predetermined separation point, for supporting a head (9) of the fastening pin (10).

5. Apparatus as claimed in claim 4, **characterised in that** the synthetic material sleeve (6) adjoins an annular receiving chamber (5) for the ferromagnetic annular body (4), said receiving chamber being open on the end face.

6. Apparatus as claimed in claim 4 or 5, **characterised in that** the synthetic material sleeve (6) which is fitted against the annular body (4) is provided with outer peripheral ribs (7).

7. Apparatus as claimed in any one of claims 4 to 6, **characterised in that** a pipe connector (11) can be fitted onto the synthetic material sleeve (6).

## Revendications

1. Procédé pour marquer un point de mesure dans une dalle en béton coulée (2), selon lequel un coffrage (1) pour la dalle en béton (2) est doté d'un corps de marquage (3) pour le point de mesure représenté sur le coffrage (1), avant que la dalle en béton soit coulée, et le corps de marquage (3) reste dans la dalle en béton (2) lors du décoffrage de la dalle en béton (2), **caractérisé en ce qu'**en guise de corps de marquage (3), un corps annulaire (4) ferromagnétique au moins par sections est fixé de façon amovible sur le coffrage (1) en position concentrique par rapport au point de mesure.

2. Procédé selon la revendication 1, **caractérisé en ce que** le corps annulaire (4) est fixé sur le coffrage (1) au moyen d'une tige de fixation (10) restant dans le coffrage (1).

3. Dispositif pour marquer un point de mesure dans une dalle en béton coulée (2) avec un corps de marquage (3) fixé sur un coffrage (1), **caractérisé en ce que** le corps de marquage (3) possède un corps annulaire (4) ferromagnétique au moins par sections qui est traversé par une tige de fixation (10), et que le corps de marquage (3) forme un appui pour la tige de fixation (10) et un point de séparation prédéterminé entre le corps annulaire ferromagnétique (4) et l'appui, de sorte que la tige de fixation (10) peut être détachée de la talle en béton (2) avec le coffrage (1).

4. Dispositif selon la revendication 3, **caractérisé en ce que** sur le corps annulaire ferromagnétique (4) se raccorde un manchon coaxial en plastique (6) qui présente un resserrement (8) formant le point de séparation prédéterminé par rapport à l'appui d'une tête (9) de la tige de fixation (10).

5. Dispositif selon la revendication 4, **caractérisé en ce que** le manchon en plastique (6) est appliqué sur une chambre de réception (5) annulaire ouverte sur sa face frontale pour le corps annulaire ferromagnétique (4).

6. Dispositif selon la revendication 4 ou 5, **caractérisé en ce que** le manchon en plastique (6) appliqué sur le corps annulaire (4) est doté d'ailettes périphériques extérieures (7).

7. Dispositif selon une des revendications 4 à 6, **caractérisé en ce qu'**un embout tubulaire (11) peut être enfilé sur le manchon en plastique (6).
